## Europäisches Patentamt
## European Patent Office
## Office européen des brevets

(19)

(11) Numéro de publication: **0 011 012**
**B1**

(12)

# FASCICULE DE BREVET EUROPEEN

(45) Date de publication du fascicule du brevet: **08.06.83**

(51) Int. Cl.³: **G 02 B 5/14**

(21) Numéro de dépôt: **79400758.3**

(22) Date de dépôt: **17.10.79**

(54) **Dispositif de centrage d'une fibre optique dans un embout, et embout muni d'une fibre optique centrée au moyen de ce dispositif.**

(30) Priorité: **31.10.78 FR 7830849**

(43) Date de publication de la demande:
**14.05.80 Bulletin 80/10**

(45) Mention de la délivrance du brevet:
**08.06.83 Bulletin 83/23**

(84) Etats contractants désignés:
**DE GB IT**

(56) Documents cités:
**DE - A - 2 456 151**
**FR - A - 2 332 546**

(73) Titulaire: **SOCAPEX**
**10 bis, quai Léon-Blum**
**F-92153 Suresnes (FR)**

(72) Inventeur: **Malsot, Christian**
**"THOMSON-CSF" - SCPI 173 bld Haussmann**
**F-75360 Paris Cedex 08 (FR)**
Inventeur: **Bouygues, Jean**
**"THOMSON-CSF" - SCPI 173 bld Haussmann**
**F-75360 Paris Cedex 08 (FR)**

(74) Mandataire: **Giraud, Pierre et al,**
**THOMSON-CSF SCPI 173, Bld Haussmann**
**F-75379 Paris Cedex 08 (FR)**

Courier Press, Leamington Spa, England.

Dispositif de centrage d'une fibre optique dans un embout, et embout réalisé
au moyen de ce dispositif.

La présente invention se rapporte à un outillage portatif, simple, fiable et utilisable sur les chantiers, qui constitue un dispositif de centrage d'une fibre optique dans un embout, de manière que l'alignement de deux embouts quelconques se fasse avec une précision de l'ordre du micron en décentrage. Les embouts sont des pièces de précision, dont la fonction dans un connecteur est double: positionnement d'un fibre optique et maintien mécanique de la fibre dans le boîtier de connecteur, simple ou multiple.

Cette invention est également applicable à un câble de transmission par fibres optiques comportant plusieurs fibres optiques, quel que soit l'agencement des fibres dans le câble.

De nombreuses techniques permettant d'aligner deux fibres pour former un connecteur débrochable existent actuellement.

Ces techniques font appel à des pièces extrêmement précises d'où une grande difficulté d'obtention des pièces primaires et un prix de revient très élevé, avec de plus un problème certain en ce qui concerne l'interchangeabilité.

Divers systèmes tels que positionnement de la fibre par trois cylindres, par tubes capillaires ou par rainures existent également. Par exemple il est de pratique courante d'utiliser un embout comportant deux méplats, orientés selon l'axe principal de l'embout de manière à former un dièdre: ce dièdre est utilisé soit seul, soit en conjonction avec un autre dièdre, comme plans de références pour le positionnement de la fibre optique dans une rainure usinée avec une grande précision le long de l'axe de l'embout. Ainsi, l'utilisation de dièdres pour aligner un embout présentant des méplats par rapport à une tel autre embout est connu, en particulier du document DE—A—2 456 151. Mais, jusqu'à présent, l'utilisation d'embouts à méplats était liée à l'usinage très précis d'une rainure, ou d'un trou capillaire pour positionner la fibre, par les parois de la rainure ou du trou capillaire. Ces technologies, applicables pour des raccordements de laboratoires, posent des problèmes certains lors d'un développement de série et de l'exploitation en chantier.

Toutes ces technologies sont en général coûteuses et n'offrent pas toutes les garanties de fiabilité et surtout d'interchangeabilité des embouts. En effet, elles présentent des systèmes dans lesquels les références directionnelles de repérage de la position de la fibre optique sont attenantes à l'embout lui-même.

D'autres systèmes font appel au surmoulage. Ces systèmes présentent cependant des différences fondamentales avec la méthode décrite ci-après, en ce sens que le surmoulage s'opère directement sur la fibre elle-même, donc implique la création de moules qui, à force de moulages successifs se dégradent à cause de l'érosion due au matériau de moulage en général chargé de fibres de verre. Le changement de ces moules pose alors un problème certain puisque l'interchangeabilité étant obligatoire, les différents moules doivent être rigoureusement identiques.

Les précisions nécessaires dans le positionnement des fibres optiques sont de l'ordre du micron, d'où des usinages très précis incompatibles avec un utilisation courante et un montage en chantier.

La présente invention ne comporte aucun de ces inconvénients. Au contraire, elle est beaucoup plus simple dans sa réalisation, facile à mettre en oeuvre, et la précision exigée sur les embouts dans lesquels sont fixées les fibres optiques est moins importante.

Selon l'invention, le positionnement précis d'une fibre optique se fait par rapport à un système de plans de références, auxquels se réfère également l'embout dans lequel est fixée la fibre optique. Le canal interne de l'embout étant de dimensions beaucoup plus grandes que le diamètre de la fibre, l'embout est positionné par rapport aux plans de références, la fibre est également positionnée par rapport à ces plans de référence et la fibre est immobilisée dans l'embout en remplissant l'espace vide entre fibre et embout au moyen d'une colle ou d'un polymère durcissable. En vue d'améliorer le positionnement de l'embout souvent de forme cylindrique, celui-ci comporte deux méplats, faisant entre eux un angle égal à l'angle formé par les plans de référence.

L'invention consiste donc en un dispositif de centrage d'une fibre optique dans un embout de connecteur, caractérisé en ce qu'il comporte,

— taillé dans un matériau rigide, un dièdre de référence,

— deux cales s'appuyant chacune par une face extérieure contre une des faces du dièdre, à l'une de ses extrémités,

— deux ou troix cylindres dont un est tangent aux deux faces intérieures des deux cales et le ou les autres sont tangents au premier cylindre et à l'une des deux faces intérieures des cales,

— les faces du dièdre étant susceptibles de recevoir à l'autre extrémité du dièdre l'embout.

D'autres aspects de l'invention ressortiront de la description détaillée qui suit, ainsi que de l'examen des figures annexées dans lesquelles:

— la figure 1 représente le schéma géométrique sur lequel est basé le dispositif selon l'invention.

— la figure 2 représente le dispositif de centrage des fibres dans leurs embouts, selon l'invention.

— la figure 3 représente l'un des systèmes préférentiels de calage des cylindres qui servent de logement à la fibre, dans le dispositif de la figure 2.

— la figure 4 montre une coupe, en section droite, d'une forme possible de l'embout utilisé avec le dispositif de centrage selon l'invention.

— la figure 5 montre l'arrangement prévu par l'invention pour le montage d'embouts dans le case de faisceaux de fibres optiques.

— la figure 6 représente un embout de connecteur obtenu par le procédé décrit au sujet de la présente invention.

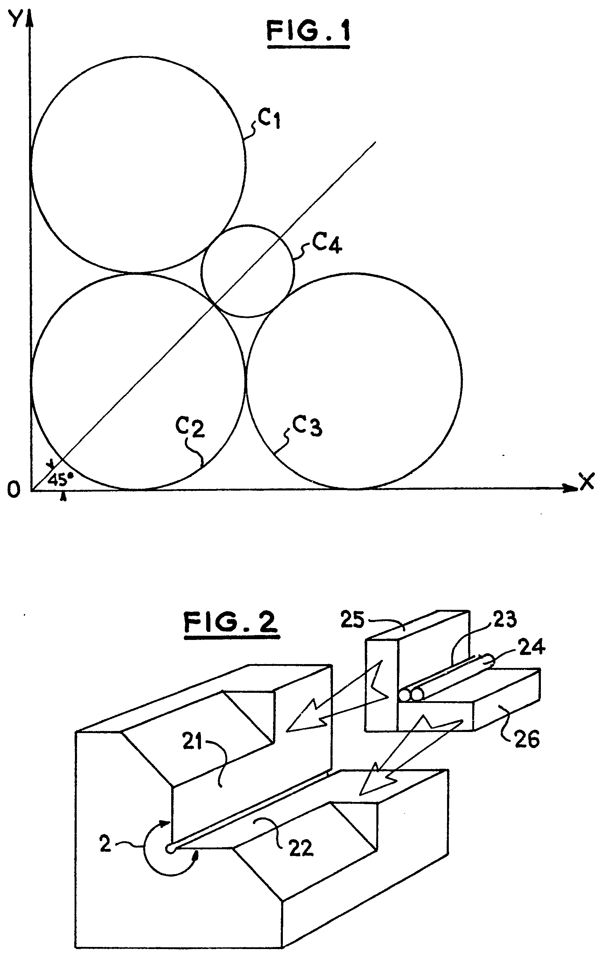

La figure 1 aidera à comprendre facilement le fondement géométrique du centrage d'une fibre optique dans son embout.

Dans un système orthonormé xOy, soient trois cercles C1, C2 et C3 tels que:
— C2 est tangent aux axes Ox et Oy
— C1 est tangent à l'axe Oy et à C2
— C3 est tangent à l'axe Ox et à C2
avec de plus, la condition que les cercles C1, C2, C3 ont même diamètre: le cercle C4, tangent aux trois cercles précités, a son centre situé sur la bissectrice de l'angle droit xOy, comme conséquence de lois géométriques bien connues.

Si le système est étendu à trois dimensions, et que les axes xOy sont remplacés par un dièdre droit, les cercles C1, C2 et C3 par trois cylindres de même diamètre, et le cercle C4 par une fibre optique, cette dernière est dans le plan bissecteur du dièdre, parallèle à son axe de recoupement.

Ce qui vient d'être dit à propos d'un système d'axes à angle droit ou d'un dièdre droit reste valable si l'angle est différent de 90°.

Dans le cas d'une fibre optique, dont le diamètre est couramment de l'ordre de 125 microns, les cylindres ont un diamètre de 302 microns, à quelques dixièmes de microns près. De façon plus générale, le rapport des diamètres de trois cercles C1, C2, C3, égaux, et tangents à deux axes perpendiculaires, et de plus tangent à un cercle C4, au diamètre du cercle C4 est égal à 2,41421.

Lors de la mise en oeuvre de cette règle de géométrie la cote précise de la fibre optique, par rapport aux faces de référence du dispositif de centrage et de l'embout, est déterminée et obtenue à l'aide de deux cales d'épaisseur, à une constante K égale aux diamètres de C1, C2, C3 près. Ces cales sont en relation avec le diamètre de l'embout.

La seule condition pour que les embouts de différents montages réalisés soient interchangeables est que les deux cales aient même épaisseur sur tous les dispositifs de centrage.

La figure 2 représente un tel dispositif selon l'invention, dans l'une des formes de réalisation possibles.

Ce dispositif, usiné dans un bloc de matériau rigide tel que par exemple un acier, comporte un dièdre unique 2, généralement creux, et préférentiellement droit — la précision obtenue à l'usinage est supérieure pour un angle droit plutôt que pour un angle quelconque — permettant la coïncidence entre les faces de référence de l'embout et les faces de référence 21 et 22 du dièdre. L'ensemble de centrage de la fibre optique, est constitué par deux cylindres de diamètres identiques 23 & 24, et deux cales orthogonales 25 & 26, d'épaisseurs identiques. En se reportant à la figure 1, il apparait que les deux cylindres 23 & 24 correspondant aux cercles C2 & C3, et qu'ils forment entre eux un logement dans lequel viendra reposer la fibre optique. Dans la mesure où les deux cales 25 & 26 ont la même épaisseur, qui est en rapport direct avec les dimensions transversales de l'embout, la fibre optique est bien dans le plan bissecteur du dièdre 2, lorsqu'elle est dans sone logement entre 23 & 24.

L'ensemble de centrage — les deux cales et les deux cylindres — est représenté en vue éclatée sur la figure 2 afin d'en faciliter la compréhension. En fait, cet ensemble est fixé, par tout moyen approprié, sur les faces 21 et 22 du dièdre, tel que symbolisé sur la figure par deux flèches. Les dimensions respectives sont telles que le dièdre 2, peut recevoir un embout et un ensemble de centrage, tous deux positionnés par rapport au même dièdre de référence: l'embout et la fibre optique sont ainsi parfaitement alignés et repérés, l'un par rapport à l'autre, ou concentriques si l'embout est de section circulaire.

Un outillage tel que le dispositif décrit est assez simple à réaliser puisque la seule précision requise est relative à la planéité des faces du dièdre 2, la position et l'angle du dièdre n'intervenant pas dans la précision de la connexion. Par ailleurs, les cylindres et les cales sont des pièces de métrologie, usinées au dixième de micron, disponibles chez de nombreux fournisseurs.

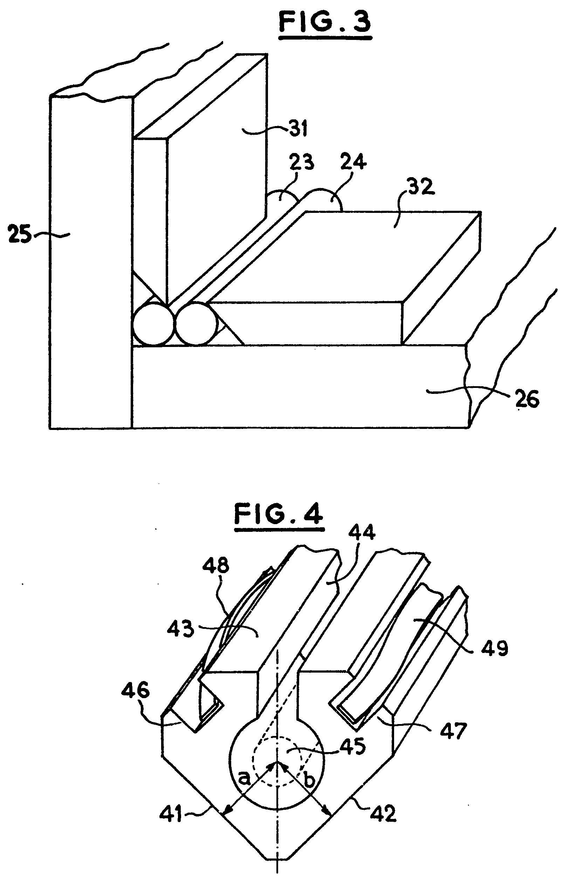

La figure 3 représente un détail du dispositif: l'un des modes possibles de fixation des cylindres 23 et 24 contre les cales 25 et 26. La précision recherchée étant de l'ordre du micron, un collage est exclu car il introduirait une couche "parasite" de colle épaisse de plusieurs microns. La soudure ou le brasage des cylindres n'est par non plus possible car les cylindres ont un diamètre de l'ordre de 300 microns, et ils se déformeraient à la soudure. Les cylindres sont donc maintenus en bonne position contre les cales 25 et 26 au moyen de deux pièces 31 et 32, biseautées sur leur face et qui exercent un effort contre les cylindres. Les pièces 31 et 32 peuvent être soudées ou collées: leur déformation éventuelle n'entrainerait aucune conséquence, puisque ces pièces n'interviennent pas directement dans le centrage de la fibre optique. Toutefois étant donné les petites dimensions de l'ensemble de quelques centaines de microns pour les cylindres à 1 ou 2 mm d'épaisseur pour les cales une solution préférable consiste à serrer l'ensemble de ces pièces, contre le dièdre 2, au moyen de deux étriers, dont les dimensions sont suffisantes pour qu'ils soient vissés contre les faces 21 et 22 du dièdre.

La figure 4 représente une coupe, en section droite de l'extrémité d'un embout utilisé avec le dispositif de centrage selon l'invention. L'autre extrémité de l'embout peut comporter différents moyens de protection de la fibre optique ou de fixation dans un connecteur multiple par exemple, qui sortent du domaine de l'invention.

L'extrémité de l'embout qui appartient au domaine de l'invention est celle qui entre en contact avec un autre embout pour assurer la connexion optique entre deux fibres. C'est donc l'extrémité dans laquelle la fibre doit être positionnée avec la plus grande précision.

L'embout est réalisé en un matériau rigide, par usinage, moulage matriçage ou tout autre procédé adéquat. Il est caractérisé par ses deux faces planes principales 41 et 42, formant un dièdre, généralement saillant et de préférence droit, mais dans tous les cas identique au dièdre 2 du dispositif de centrage. Une troisième face plane principale 43 comporte une rainure 44, parallèle à l'arête du dièdre précédemment décrit, d'une largeur supérieure au diamètre de la fibre et d'une profondeur supérieure à la distance théorique de la fibre à cette face 43. Une forme préférée de rainure consiste à l'élargir dans la région où se trouve la fibre: la fibre peut ainsi être insérée dans la rainure sans toucher l'embout, ce qui autorise donc son positionnement précis.

En vue de faciliter la compréhension de la figure 4, la fibre optique 45 y est représentée en pointillés: après positionnement précis de la fibre dans l'embout, au moyen du dispositif selon l'invention, la fibre est immobilisée au moyen d'une colle, introduite dans la rainure 44. Cette colle est préférentiellement polymérisable et durcissable à température ordinaire, et elle est chargée de poudre de quartz ou der verre, en vue de faciliter le polissage ultérieur de l'extrémité de l'embout.

La forme et le nombre des autres faces secondaires de l'embout ne jouent pas un rôle déterminant.

Il est remarquable que cet embout est symétrique par rapport au plan bissecteur du dièdre formé par les plans 41 et 42: il s'ensuit que tous les embouts identiques à celui représenté sont asexués, et que, sous la seule restriction que la fibre optique soit à la même distance de chacun des plans du dièdre ($a = b$), n'importe quel embout peut être raccordé à n'importe quel autre, sans distinction de sens ni de côté (droit ou gauche).

L'embout comporte encore, sur deux faces secondaires, deux rainures 46 et 47, dont la particularité est que chacune d'entre elles se trouve sur une face opposée à une face du dièdre.

Ainsi, à titre d'exemple non limitatif, la rainure 46 est taillée dans une face opposée à la face 42, par rapport au centre de la fibre optique, et la rainure 47 est taillée dans une face opposée à la face 41. Ces rainures reçoivent des moyens élastiques, telles que des lames de ressort 48 et 49. Les lames de ressort n'interviennent pas au cours de centrage de la fibre, dans le dispositif selon l'invention: elles interviennent dans le connecteur, groupant deux embouts, et assurent le centrage de la fibre optique, en exerçant une pression qui place le dièdre 41—42 en bonne position par rapport au boitier du connecteur.

Ces précisions sur l'embout étaient nécessaires pour mieux comprendre comment la fibre optique est positionnée au moyen du dispositif selon l'invention: la fibre et l'embout sont tous deux repérés par rapport à un seul et unique dièdre, le dièdre 2 de la figure 2.

Les différentes étapes de la réalisation d'un embout se décomposent de la façon suivante:

a) montage du logement de la fibre, et blocage en position des cales 25 & 26, des cylindres 23 & 24 et des pièces de fixation 31 et 32.

b) blocage de l'embout par des moyens adéquats qui sortent du domaine de l'invention, dans la position où son dièdre est en coïncidence avec le dièdre de référence du dispositif.

c) dénudage de la fibre optique de sa gaine plastique, sur une longueur au moins égale à la longueur de son logement augmentée d'environ la moitié d'une longueur d'embout.

d) blocage de la fibre dans son logement, après l'avoir passée dans l'embout. Une pièce possédant un matelats caoutchouté convient bien au blocage de la fibre dans son logement.

e) surmoulage de la fibre dans sa position, avec un matériau relativement dur dans son état stable, tel que colles, chargées ou non de fines particules de quartz ou de verre, et polymérissables. Tout autre système de surmoulage, tel que la réticulation par rayonnement ultra-violet, peut convenir: ni le matériau employé, ni la méthode ne relevant de l'invention.

f) sciage ou cassure de la fibre optique, au ras de l'embout, du côté où doit se faire la connexion avec une autre fibre optique, et polisage de cette extrémité de l'embout, selon une technique classique à tous les raccordements optiques.

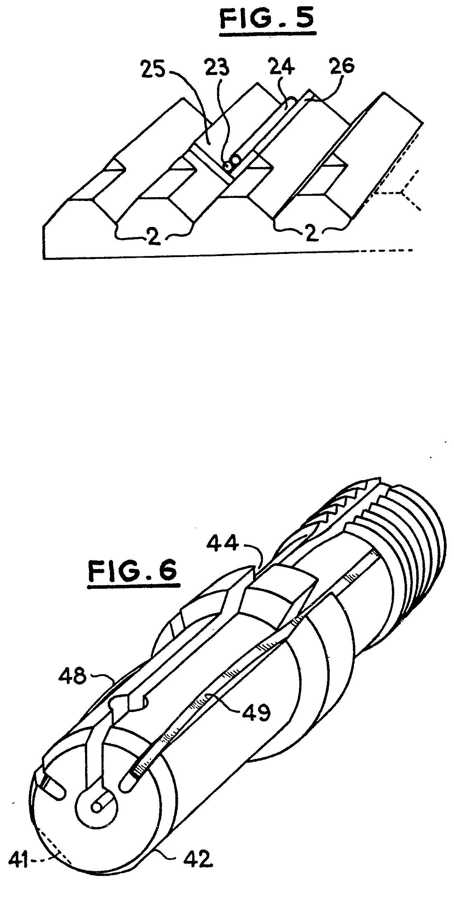

La figure 5 revient en rapport avec l'outillage utilisé et représente le dispositif selon l'invention dans le cas où le connecteur à réaliser comporte non plus une seule liaison optique, mais le raccordement de deux faisceaux de fibres.

Plutôt que répéter "n" fois pour "n" fibres le surmoulage d'un embout ay moyen de l'outillage simple représenté en figure 2, ce qui risquerait de casser une fibre pendant la manipulation des autres fibres, l'invention prévoit également un outillage multiple, grâce auquel plusieurs fibres son positionnées simultanément dans plusieurs embouts. La figure 5 représente les quatre premiers dièdres d'un tel outillage multiple: les cylindres calibrés 23 et 24 et les cales 25 et 26 sont représentées, à titre d'illustration, dans le premier dièdre.

La figure 6 représente un type d'embout monofibre réalisé avec les moyens de l'invention.

La fibre optique apparait au centre de la face de raccordement, et est également représentée, partiellement recouverte de sa gaine de protection, du côté "ligne" de l'embout. Le dièdre de référence est constitué par les deux plans 41 et 42, et des moyens élastiques, tels que des lames de ressort 48 et 49, appliquent l'embout contre un autre dièdre, de référence, identique à celui défini par les plans 41 et 42, mais qui fait partie du boitier du connecteur.

Des moyens sont prévus pour maintenir l'embout dans le boitier de connecteur et contre un autre embout identique avec lequel il constitue un raccordement: à titre purement explicatif, ces moyens sont représentés sous forme d'un filetage.

### Revendications

1. Dispositif de centrage d'une fibre optique dans un embout de connecteur, caractérisé en ce qu'il comporte,

a) taillé dans un matériau rigide, un dièdre de référence (2),

b) deux cales (25, 26) s'appuyant chacune par une face extérieure contre une des faces du dièdre, à l'une de ses extrémités,

c) deux ou trois cylindres (C1, C2, C3) dont un (C2) est tangent aux deux faces intérieures des deux cales et le ou les autres (C1, C3) sont tangents au premier cylindre (C2) et à l'une des deux faces intérieures des cales,

d) les faces du dièdre étant susceptibles de recevoir à l'autre extrémité du dièdre l'embout.

2. Dispositif de centrage selon la revendication 1, caractérisé en ce qu'il comporte deux cylindres (23, 24) de diamètre identique et égal à 2,41421 fois celui de la fibre dans le cas d'un dièdre droit et en ce que les cales (25, 26) sont d'épaisseur égale.

3. Dispositif de centrage selon la revendication 1, caractérisé en ce que le dièdre ce référence (2) est d'angle compris entre 60° et 120°.

4. Embout muni d'une fibre optique centrée au moyen d'un dispositif selon la revendication 1 comportant deux faces extérieures planes formant entre elles un angle, caractérisé par le fait qu'il comporte en outre une rainure longitudinale (44) dont la largeur et la profondeur supérieures au diamètre de la fibre laissent un jeu entre la fibre et l'embout.

### Patentansprüche

1. Vorrichtung Um Zentrieren einer optischen Faser in einem Anschluß-Endstück, dadurch gekennzeichnet, daß sie enthält:

a) ein aus starrem Material geschnittenes Bezugs-Zweiflach (2),

b) zwei Anlegklötze (25, 26), die sich jeweils mit einer Außenfläche auf einer Fläche des Zweiflachs abstützen, und zwar an dem einen seiner Enden,

c) zwei oder drei Zylinder (C1, C2, C3), von denen einer (C2) die beiden Innenflächen der beiden Anlegklötze tangiert, während der andere bzw. die anderen (C1, C3) den ersten Zylinder (C2) und eine der beiden Innenflächen der Anlegklötze tangieren,

d) wobei die Flächen des Zweiflachs dazu bestimmt sind, am anderen Ende des Zweiflachs das Endstück aufzunehmen.

2. Zentriervorrichtung nach Anspruch 1, dadurch gekennzeichnet, daß sie zwei Zylinder (23, 24) gleichen Durchmessers umfaßt, welcher für den Fall eines rechtwinkligen Zweiflachs das 2,41421-fache des Durchmessers der Faser beträgt, und daß die Anlegklötze (25, 26) dieselbe Dicke haben.

3. Zentriervorrichtung nach Anspruch 1, dadurch gekennzeichnet, daß das Bezugs-Zweiflach (2) einen Winkel zwischen 60° und 120° bildet.

4. Endstück, welches mit einer optischen Faser versehen ist, die mittels einer Vorrichtung nach Anspruch 1 zentriert ist, mit zwei ebenen Außenflächen, die miteinander einen Winkel bilden, dadurch gekennzeichnet, daß es ferner eine Längsrille (44) umfaßt, deren Breite und Tiefe größer sind als der Durchmesser der Faser und zwischen der Faser und dem Endstück ein Spiel belassen.

### Claims

1. Device for centering an optic fiber in a socket, characterized in that it comprises

a) a reference dihedral (2) cut from a rigid material,

b) two wedges (25, 26) each bearing by an outside face against one of the faces of the dihedral at one end thereof,

c) two or three cylinders (C1, C2, C3) one of which (C2) is tangent to the two inside faces of the two wedges, the other one or ones (C1, C3) being tangent to the first cylinder (C2) and to one of the two inside faces of the wedges,

d) the faces of the dihedral being susceptible of receiving the socket at the other end of the dihedral.

2. Centering device in accordance with claim 1, characterized in that it comprises two cylinders (23, 24) of identical diameter which is the 2,41421-fold of that of the fiber in case of a rectangular dihedral and in that the wedges (25, 26) are of equal thicknesses.

3. Centering device in accordance with claim 1, characterized in that the reference dihedral (2) has an angle comprised between 60° and 120°.

4. Socket provided with an optic fiber centered by means of a device in accordance with claim 1 and comprising two plane outside faces forming an angle therebetween, characterized by the fact that it further comprises a longitudinal groove (44) the width and depth of which exceed the diameter of the fiber leaving clearance between the fiber and the socket.

## FIG.1

## FIG.2

## FIG. 3

## FIG. 4

2

## FIG. 5

25  23  24  26

2  2

## FIG. 6

44

48

49

41  42